Europäisches Patentamt

European Patent Office

Office européen des brevets

(19)

(11) EP 0 852 421 A1

## (12) DEMANDE DE BREVET EUROPEEN

(43) Date de publication:
08.07.1998 Bulletin 1998/28

(51) Int Cl.$^6$: **H02K 25/00**

(21) Numéro de dépôt: 97403085.0

(22) Date de dépôt: 19.12.1997

(84) Etats contractants désignés:
**AT BE CH DE DK ES FI FR GB GR IE IT LI LU MC NL PT SE**
Etats d'extension désignés:
**AL LT LV MK RO SI**

(30) Priorité: 03.01.1997 FR 9700018

(71) Demandeur: **Frangie, Nabil H.**
**Montreal H2R 1J7, Québec (CA)**

(72) Inventeur: **Frangie, Nabil H.**
**Montreal H2R 1J7, Québec (CA)**

(74) Mandataire: **Bonnetat, Christian**
**CABINET BONNETAT**
**29, rue de St. Pétersbourg**
**75008 Paris (FR)**

### (54) **Machine électrique**

(57) La présente invention concerne une machine électrique.

Selon l'invention, elle comprend :

- un ensemble de propulsion, comportant :

  . un premier support circulaire rotatif (1) présentant une pluralité de premiers électroaimants (3),
  . un second support circulaire fixe (7) présentant une pluralité de seconds électroaimants (8),

- lesdits seconds électroaimants (8) étant tels que, pour chacun d'entre eux, la longueur optimale de leur bobinage est définie, en mètres, par la formule suivante :

$$L = \frac{s^2 . 0,033 V}{2k.I}$$

dans laquelle :

  . V est la tension, en volts, appliquée à l'électroaimant,
  . k est une constante,
  . s est la section, en mm2, du fil de bobinage, et
  . I est l'intensité, en ampères, du courant.

FIG.1

**Description**

La présente invention concerne une machine électrique.

La production d'énergie électrique est soumise à
différentes contraintes qui résultent des effets négatifs
que ladite production entraîne. Ces contraintes sont
constituées, d'une part, par la disponibilité à long terme
des énergies fossiles et par la pollution que leur combustion cause et, d'autre part, par le rendement incertain des deux principales énergies renouvelables --éolienne et solaire-- et, enfin, par les problèmes de sécurité et par l'impopularité que rencontre l'extension de
l'usage de l'énergie nucléaire.

L'ensemble des effets négatifs de la production
d'énergie électrique a pour conséquences deux faits
principaux : les investissements augmentent de plus en
plus, tandis que la dégradation de l'environnement devient de plus en plus sensible.

La présente invention a pour but de fournir une machine électrique produisant une énergie électrique sans
effets nocifs pour l'environnement et avec des coûts
d'installation et de fonctionnement plus modérés, grâce
à l'amélioration du rendement de tout appareil électrique produisant du courant continu.

A cet effet, la machine électrique selon l'invention
est remarquable en ce qu'elle comprend :

- des moyens d'alimentation en courant électrique
  continu,
- des moyens générateurs de courant électrique,
  comprenant un ensemble rotor-stator,
- un ensemble de propulsion, comportant :

  . un premier support circulaire rotatif, monté sur
    un axe et présentant une pluralité de premiers
    électroaimants régulièrement répartis à sa périphérie,
  . un second support circulaire fixe, disposé
    coaxialement audit premier support et à l'extérieur de celui-ci, présentant une pluralité de seconds électroaimants reliés auxdits moyens
    d'alimentation en courant par un câble électrique,

- des moyens d'inversion de courant adaptés pour
  assurer la rotation desdits premiers électroaimants
  portés par ledit premier support circulaire rotatif par
  rapport auxdits seconds électroaimants portés par
  ledit second support circulaire fixe,
- lesdits seconds électroaimants étant tels que, pour
  chacun d'entre eux, la longueur optimale L de leur
  bobinage est définie, en mètres, par la formule suivante, à température ambiante :

$$L = \frac{s^2 . 0{,}033V}{2k.l}$$

dans laquelle :

  . V est la tension, en volts, appliquée à l'électroaimant,
  . k est une constante dépendant du matériau utilisé pour le fil de bobinage,
  . s est la section transversale, en mm², du fil de
    bobinage, et
  . l est l'intensité, en ampères, du courant, et

- ledit axe étant relié auxdits moyens générateurs.

Cela présente les avantages explicités ci-après en
liaison à la description d'un exemple de réalisation préféré de l'invention.

Avantageusement, pour la liaison entre les électroaimants portés par le premier support et les moyens
d'alimentation en courant électrique, il est prévu, autour
de l'axe dudit premier support rotatif, un support isolant
servant d'appui à un premier cylindre creux, rempli d'isolant, et contenant un second cylindre, les deux cylindres
étant reliés auxdits moyens d'inversion de courant, eux-
mêmes reliés auxdits moyens d'alimentation en courant
électrique. Dans le cas d'une autre configuration, les
électroaimants portés par le premier support pourraient
être reliés aux moyens d'inversion du courant, eux-mêmes reliés aux moyens d'alimentation en courant électrique, grâce à une liaison directe, sans passer par les
cylindres autour de l'axe.

Avantageusement, lesdits électroaimants mobiles
présentent chacun la forme d'un cylindre de diamètre
variable, plus petit à la périphérie dudit support, plus
grand vers le centre de ce dernier.

De plus, dans le câble, reliant les électroaimants
portés par le second support fixe, de retour vers les
moyens d'alimentation en courant électrique, il est prévu un appareil de récupération du courant.

Par ailleurs, soit l'axe dudit premier support rotatif
est directement solidaire du rotor desdits moyens générateurs, soit l'axe dudit premier support rotatif est solidaire du rotor desdits moyens générateurs par l'intermédiaire d'un premier disque porté par ledit axe et d'un
second disque, de plus petit diamètre, porté par ledit rotor, lesdits premier et second disques étant reliés par
une courroie de transmission.

De préférence, lesdits moyens d'inversion du courant comprennent deux rails conducteurs circulaires
concentriques, portés par un support fixe indépendant
de l'ensemble rotatif et reliés aux sources d'alimentation
électrique, lesdits rails étant découpés en deux fois plus
de segments qu'il existe d'électroaimants fixes, et coopérant avec des billes montées sur deux barres isolantes fixées sur le disque rotatif à une hauteur telle que
les billes touchent lesdits rails.

Alternativement, lesdits moyens d'inversion du courant comprennent deux rails conducteurs formant des
arcs de cercle concentriques.

Dans ce dernier cas, lesdits rails sont découpés en deux fois plus de segments qu'il existe d'électroaimants fixes qui leur font face.

Les figures du dessin annexé feront bien comprendre comment l'invention peut être réalisée. Sur ces figures, des références identiques désignent des éléments semblables.

La figure 1 est un schéma, en vue de dessus, d'un exemple de réalisation de la machine selon l'invention.

La figure 2 est une coupe transversale de la machine de la figure 1.

La figure 3 montre un détail agrandi de la figure 2.

La figure 4 illustre, en vue de dessus partielle, l'agencement des rails des moyens d'inversion de courant.

La figure 5 montre une première possibilité de liaison entre l'axe du support rotatif et les moyens générateurs de courant électrique.

La figure 6 montre une seconde possibilité de liaison entre l'axe du support rotatif et les moyens générateurs de courant électrique.

La figure 7 montre un inverseur de courant composé de deux rails formant des arcs de cercle concentriques.

La figure 8 montre schématiquement un appareil de récupération du courant.

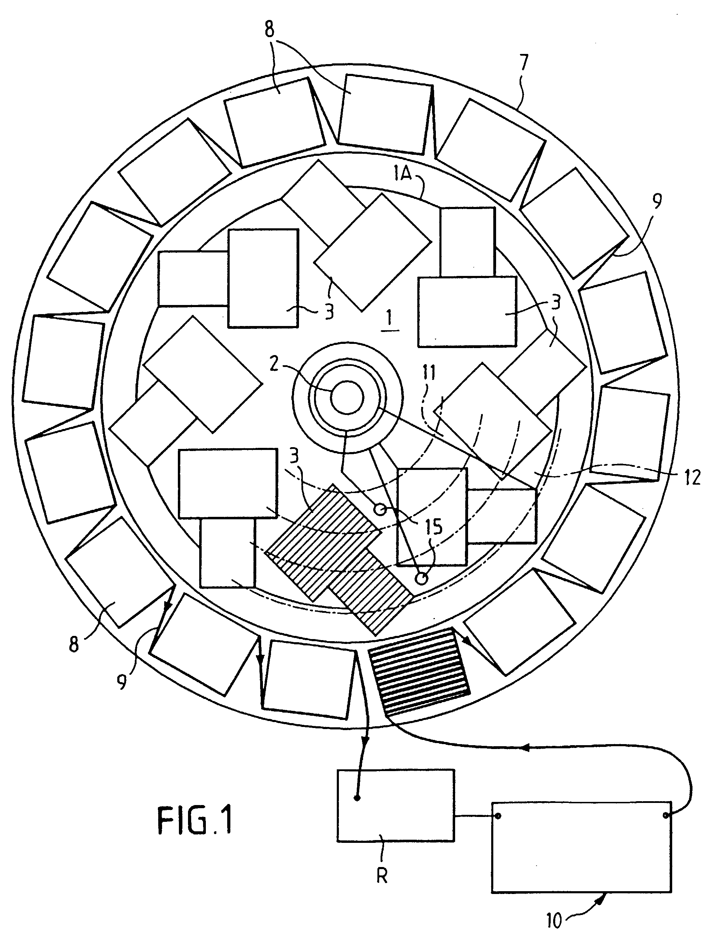

Comme on le voit notamment sur la figure 1, la machine électrique selon l'invention comporte un premier support circulaire mobile 1 solidaire en rotation d'un axe 2 passant par son centre, et portant, sur son bord 1A, une pluralité d'électroaimants 3 régulièrement répartis à la périphérie du support rotatif 1, alimentés en courant électrique continu, à partir d'une source d'énergie électrique 10. Dans l'exemple représenté, il est prévu 8 tels électroaimants 3. La forme de chacun de ces électroaimants 3 est celle d'un cylindre de diamètre variable, plus petit à la périphérie du support 1, plus grand vers le centre de ce dernier, suivant les contraintes de l'installation. Il va de soi qu'un tel nombre n'est absolument pas limitatif. D'autres configurations sont bien entendu possibles (en relation avec le nombre d'électroaimants 8 décrits ci-après), comme par exemple l'agencement de 16 ou plus aimants. La polarité de chaque électroaimant 3 est déterminée par les moyens d'inversion de courant A décrits ci-après.

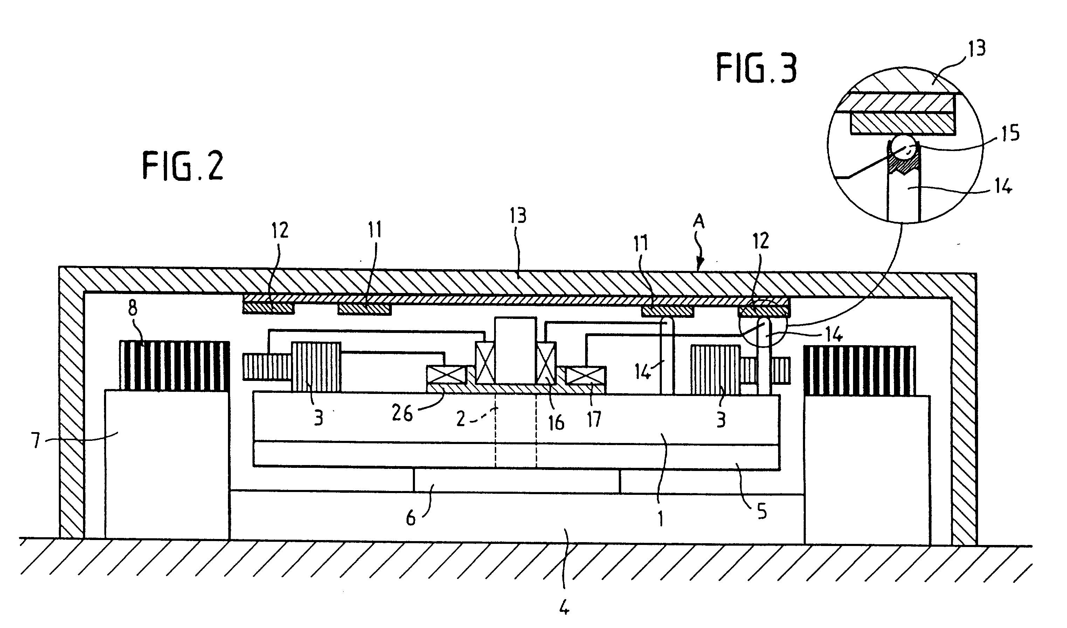

Comme le montre la figure 2, le support rotatif 1 repose sur une base 4, avantageusement par l'intermédiaire d'un second plateau rotatif 5, par exemple, lui-même relié à un roulement à billes 6.

La machine de l'invention comporte de plus, autour du premier support circulaire mobile 1 et agencé coaxialement à celui-ci et à une certaine distance de celui-ci, un second support circulaire fixe 7, portant une pluralité d'électroaimants 8 modifiés comme on le verra par la suite (par exemple 16 comme représenté sur la figure 1). Les électroaimants 8 peuvent être reliés entre eux par un même câble électrique 9 qui assure l'alimentation, ou encore être reliés individuellement, par paires ou par groupes, suivant les contraintes de l'installation, aux sources d'énergie. En outre, la polarité du pôle de chaque électroaimant 8 dirigé vers les électroaimants 3 est fixe et ne varie pas.

L'alimentation en courant de ces électroaimants 8 est assurée par une source d'énergie 10 produisant du courant électrique continu.

Par ailleurs, des moyens A d'inversion de courant, adaptés pour assurer la rotation des premiers électroaimants 3 portés par le premier support circulaire rotatif 1 par rapport aux seconds électroaimants 8 portés par le second support circulaire fixe 7, sont prévus, comme cela est illustré plus en détail sur les figures 2, 3, 4 et 7.

L'inversion du courant électrique peut être commandée et gérée de différentes manières, l'essentiel demeurant d'obtenir une réponse immédiate à la demande d'inversion, ce qui n'est pas le cas dans certains dispositifs photoélectriques qui exigent un certain temps de réaction.

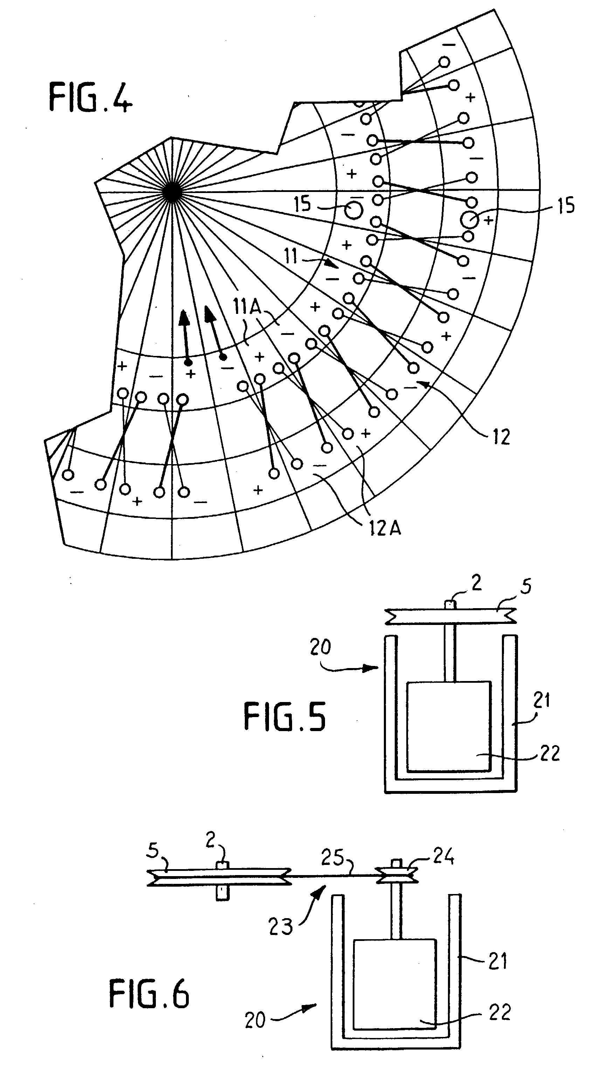

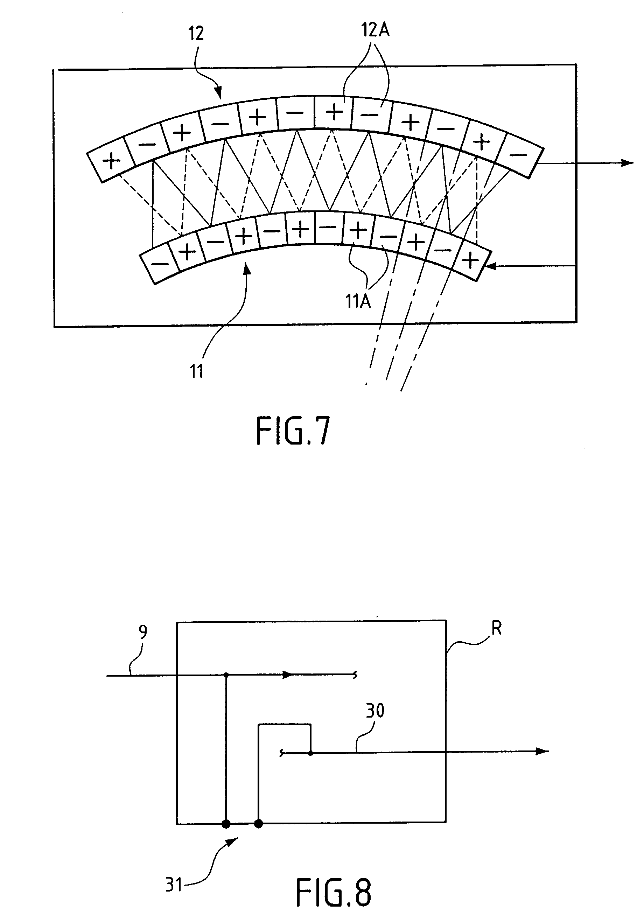

A côté d'une gestion électronique commandée par ordinateur, il existe une possibilité d'inverser le courant électrique dans les électroaimants 3, qui est la suivante. Les moyens A d'inversion du courant électrique se composent de deux rails conducteurs circulaires concentriques 11, 12, ou par des rails formant des arcs de cercle concentriques 11, 12 (figure 7), portés par un support fixe 13 indépendant de l'ensemble rotatif, et reliés aux sources d'alimentation électrique 10, les rails 11, 12 étant dirigés vers ledit ensemble rotatif. Ces deux rails sont découpés en deux fois plus de segments 11A, 12A qu'il existe d'électroaimants 8 sur le support fixe 7 à partir du centre du cercle qu'ils forment. Dans le cas d'arcs de cercle, chaque ensemble de deux rails comporte un nombre de segments égal à deux fois le nombre d'électroaimants fixes qui lui font face. En effet, avec l'inversion du courant électrique dans les électroaimants 3, chaque électroaimant 8 est appelé à jouer un rôle de répulsion puis d'attraction (ou inversement) et deux inversions de courant lui sont donc nécessaires, la première pour provoquer l'attraction, la seconde pour provoquer la répulsion. Leur polarité est croisée ; on trouve donc un segment "+" et le suivant "-" sur chaque rail, chaque segment "+" ou "-" de chaque rail 11, 12 étant relié, comme montré sur la figure 4, aux segments adjacents respectivement "+" ou "-" de l'autre rail, chaque segment "+" (par exemple) d'un rail étant en regard d'un segment "-" de l'autre rail.

Entre les segments électrifiés se trouve une matière isolante dure, exactement au même niveau que lesdits segments, qui facilite le passage de la bille d'un segment à l'autre.

Sur le disque rotatif 1, deux barres isolantes verticales 14 fixées sur ledit disque sur un même rayon partant du centre du disque portent deux billes rotatives 15 à une hauteur telle que les billes 15 touchent les rails électrifiés 11, 12. Les billes 15 sont reliées aux deux extrémités des électroaimants 3. Comme une installation peut comporter un grand nombre de ces électroaimants, il sera peut-être nécessaire d'augmenter le nombre de billes 15, suivant les contraintes de l'installation.

Lorsque le disque rotatif tourne, les deux billes 15 portées par les deux barres 14 effectuant la liaison entre le support rotatif 1 et le support fixe 13, passent sur un segment de rail positif pour l'une et négatif pour l'autre, puis, avec la rotation du support rotatif 1, elles passent sur un segment de rail négatif pour l'une et positif pour l'autre, de telle sorte que s'établit ainsi l'inversion du courant reçu par les électroaimants mobiles 3.

Ces derniers changent donc de polarité régulièrement et, comme les électroaimants fixes ont une polarité fixe, il se produit entre les électroaimants 3 et les électroaimants 8 une succession de phénomènes d'attraction et de répulsion qui assure la rotation de l'ensemble rotatif.

De plus, les électroaimants fixes 8 sont tels que, pour chacun d'entre eux, la longueur optimale L de leur bobinage est définie, en mètres, par la formule suivante, à température ambiante :

$$L = \frac{s^2 . 0,033V}{2k.l}$$

dans laquelle :

- V est la tension, en volts, appliquée à l'électroaimant,
- k est une constante dépendant du matériau utilisé pour le fil de bobinage,
- s est la section transversale, en mm$^2$, du fil de bobinage, et
- l est l'intensité, en ampères, du courant.

En d'autres termes, les électroaimants 8 présentent la particularité suivante. Alors que les électroaimants classiques sont conçus pour obtenir le champ magnétique le plus élevé et, par conséquent, pour obtenir la force induite la plus élevée possible, au prix d'un très grand nombre de spires et de l'échauffement du solénoïde et du cylindre autour duquel il s'enroule (ce qui est le cas des électroaimants 3), les électroaimants 8 sont par contre conçus pour limiter au maximum tout échauffement et pour privilégier la récupération du courant électrique qui passe dans les spires, après que ses effets magnétiques ont été utilisés.

De plus, comme la puissance d'un électroaimant est fonction de quatre paramètres essentiels, à savoir :

- l'intensité du courant,
- la tension du courant,
- le nombre de spires et, par conséquent, la longueur du câble électrique utilisé et également la longueur du cylindre (noyau) entouré par ce même câble, et
- la perméabilité relative du métal ou de l'alliage utilisé,

il convient d'établir entre ces quatre variables un état d'optimisation permettant de générer le plus fort champ magnétique, et donc la plus grande force induite, avant de récupérer le maximum de la puissance engagée dans le processus en limitant tout échauffement des câbles.

En outre, le câble d'alimentation et de retour 9 suit un cheminement particulier. Le câble partant de la source d'alimentation électrique 10 fait agir les électroaimants, mais avant de retourner à la source d'alimentation électrique, il passe par un appareil R de récupération de l'énergie qu'il transporte. Les électroaimants 8, tels que définis plus haut, utilisent seulement la force électromagnétique obtenue par l'effet "solénoïde" desdits électroaimants, sans utiliser en totalité l'énergie électrique véhiculée par le câble, qui subit néanmoins une certaine perte.

Par conséquent, après avoir utilisé les effets du courant électrique, il est possible d'utiliser le courant lui-même. Aussi, le câble 9 de retour aux moyens d'alimentation en courant continu 10 passe-t-il par un appareil R de récupération du courant. Cet appareil de récupération est constitué, comme le montre la figure 8, par le câble 9 et par un autre câble 30 venant du deuxième pôle de la source d'énergie, le câble 9 venant du premier pôle. Ces deux câbles ne se touchent pas. De chacun de ces deux câbles part un ou plusieurs fils électriques qui, assemblés deux par deux, forment autant de prises de courant 31 permettant de récupérer le courant électrique contenu dans le câble 9, dans son retour aux moyens d'alimentation en courant continu 10.

A partir de l'ensemble support mobile 1 - support fixe 7, la production d'énergie est assurée par un générateur électrique 20, constitué d'un stator 21 et d'un rotor 22 (figure 5). Le rotor 22 est solidaire de l'axe 2 du support rotatif 1. Lorsque ce dernier tourne sous l'effet des forces de répulsion magnétique engendrées au niveau des aimants 3 et 8 en regard, le rotor 22 tourne également dans le stator 21, et le générateur 20 produit de l'énergie électrique.

Cependant, si la vitesse de rotation du support mobile 1 est insuffisante, on peut alors prévoir un dispositif de surmultiplication classique 23 (figure 6) de façon que le rotor 22 atteigne une vitesse de rotation adéquate.

Dans ce cas, sur l'axe 2 du support rotatif 1 (duquel le rotor 22 n'est plus solidaire), le disque 5, présentant une gorge périphérique, est relié à un autre disque 24, de diamètre beaucoup plus réduit, présentant de même une gorge périphérique. Les deux disques 5, 24 sont reliés par une courroie de transmission 25, le disque 24 étant solidaire du rotor 22 du générateur 20. Des roues dentées de différents diamètres pourraient être également utilisées.

Lorsque le support mobile 1 tourne, la vitesse de rotation du petit disque 24 est surmultipliée et le générateur 20 peut produire de l'énergie électrique.

La machine selon l'invention fonctionne de la façon suivante.

Lors de la mise en marche de la machine, l'électricité alimente les électroaimants fixes 8 et mobiles 3, ce qui, en développant une polarité de même type que celle présentée par la face en regard des électroaimants 3, provoque un effet de répulsion entre les aimants. Le système rotatif tourne et, pour continuer à tourner, les pâles des électroaimants disposés sur le disque rotatif sont régulièrement inversés grâce, par exemple, aux moyens d'inversion du courant A décrits ci-dessus.

De plus, le support rotatif 1 étant solidaire du rotor 22 du générateur 20, directement ou par l'intermédiaire du dispositif décrit 23 de surmultiplication de la vitesse de rotation, de l'énergie électrique sera produite par le rotor 22 tournant dans le stator 21.

L'énergie totale fournie par l'ensemble de la machine sera donc constituée par celle récupérée dans les câbles enroulés autour des électroaimants 8, d'une part, et celle produite par le générateur 20, d'autre part, dans l'exemple représenté.

On notera que le fait de récupérer le courant électrique circulant dans le câble de retour 9 vers les moyens d'alimentation en courant continu 10 à travers le dispositif de récupération du courant R permet, outre le fait de l'utiliser directement, de le réutiliser simultanément avec le câble 9 et d'alimenter d'autres électroaimants 8, avec les modifications techniques qui s'imposeraient dans ce cas, des électroaimants 8 qui pourraient donc être situés sur le même support fixe 7 que les premiers, ou encore sur un autre support fixe de type semblable faisant réagir un autre support rotatif de type similaire solidaire de l'axe 2, ou enfin d'alimenter un ensemble de propulsion différent.

On notera en outre que l'alimentation en courant électrique des électroaimants 3 peut se faire suivant le schéma de la figure 2 : autour de l'axe central 2, un support isolant 26 sert d'appui à un cylindre creux 17. Le cylindre creux 17, rempli d'isolant, contient un autre cylindre 16, de plus faible diamètre, les deux cylindres alimentant les électroaimants à une polarité différente. L'ensemble est relié par les barres verticales 14 aux moyens A d'inversion du courant eux-mêmes reliés aux sources d'énergie.

**Revendications**

1. Machine électrique,
   caractérisée en ce qu'elle comprend :

   - des moyens (10) d'alimentation en courant électrique continu,
   - des moyens (20) générateurs de courant électrique, comprenant un ensemble rotor-stator,
   - un ensemble de propulsion, comportant :

     . un premier support circulaire rotatif (1), monté sur un axe (2) et présentant une pluralité de premiers électroaimants (3) régulièrement répartis à sa périphérie,
     . un second support circulaire fixe (7), disposé coaxialement audit premier support (1) et à l'extérieur de celui-ci, présentant une pluralité de seconds électroaimants (8) reliés les uns aux autres et auxdits moyens (10) d'alimentation en courant par un câble électrique (9),

   - des moyens (A) d'inversion de courant adaptés pour assurer la rotation desdits premiers électroaimants (3) portés par ledit premier support circulaire rotatif (1) par rapport auxdits seconds électroaimants (8) portés par ledit second support circulaire fixe (7),
   - lesdits seconds électroaimants (8) étant tels que, pour chacun d'entre eux, la longueur optimale L de leur bobinage est définie, en mètres, par la formule suivante :

   $$L = \frac{s^2 . 0{,}033 V}{2k.l}$$

   dans laquelle :

     . V est la tension, en volts, appliquée à l'électroaimant,
     . k est une constante dépendant du matériau utilisé pour le fil de bobinage,
     . s est la section transversale, en mm$^2$, du fil de bobinage, et
     . l est l'intensité, en ampères, du courant, et

   - ledit axe (2) étant relié auxdits moyens générateurs (20).

2. Machine selon la revendication 1,
   caractérisée en ce que, pour la liaison entre les électroaimants (3) portés par le premier support (1) et les moyens (10) d'alimentation en courant électrique, il est prévu, autour de l'axe (2) dudit premier support rotatif (1), un support isolant (26) servant d'appui à un premier cylindre creux (17), rempli d'isolant, et contenant un second cylindre (16).

3. Machine selon la revendication 1 ou 2,
   caractérisée en ce que lesdits électroaimants mobiles (3) présentent chacun la forme d'un cylindre de diamètre variable, plus petit à la périphérie dudit support (1), plus grand vers le centre de ce dernier.

4. Machine selon l'une quelconque des revendications 1 à 3,
   caractérisée en ce que, dans le câble (9), reliant les électroaimants (8) portés par le second support fixe (7), de retour vers les moyens (10) d'alimentation en courant électrique, il est prévu un appareil (R) de récupération du courant.

5.  Machine selon l'une quelconque des revendications 1 à 4,
    caractérisée en ce que l'axe (2) dudit premier support rotatif (1) est directement solidaire du rotor (22) desdits moyens générateurs (20).

6.  Machine selon l'une quelconque des revendications 1 à 4,
    caractérisée en ce que l'axe (2) dudit premier support rotatif (1) est solidaire du rotor (22) desdits moyens générateurs (20) par l'intermédiaire d'un premier disque (5) porté par ledit axe (2) et d'un second disque (24), de plus petit diamètre, porté par ledit rotor (22), lesdits premier et second disques étant reliés par une courroie de transmission (25).

7.  Machine selon l'une quelconque des revendications 1 à 6,
    caractérisée en ce que lesdits moyens (A) d'inversion du courant comprennent deux rails conducteurs circulaires concentriques (11, 12), portés par un support fixe (13) indépendant de l'ensemble rotatif et reliés aux sources d'alimentation électrique (10), lesdits rails (11, 12) étant découpés en deux fois plus de segments (11A, 12A) qu'il existe d'électroaimants fixes (8), et coopérant avec des billes (15) montées sur deux barres isolantes (14) fixées sur le disque rotatif (1) à une hauteur telle que les billes (15) touchent lesdits rails (11, 12).

8.  Machine selon l'une quelconque des revendications 1 à 6,
    caractérisée en ce que lesdits moyens (A) d'inversion du courant comprennent deux rails conducteurs formant des arcs de cercle concentriques (11, 12).

9.  Machine selon la revendication 8,
    caractérisée en ce que lesdits rails sont découpés en deux fois plus de segments (11A, 12A) qu'il existe d'électroaimants fixes (8) qui leur font face.

FIG.1

FIG.3

FIG.2

FIG.4

FIG.5

FIG.6

FIG.7

FIG.8

EP 0 852 421 A1

<table>
<tr><td colspan="2"></td><td>Office européen<br>des brevets</td><td>RAPPORT DE RECHERCHE EUROPEENNE</td><td>Numéro de la demande<br><br>EP 97 40 3085</td></tr>
</table>

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 1 497 668 A (A. B. BROLUSKA) 17 juin 1924<br>* figure 4 *<br>--- | 1 | H02K25/00 |
| A | US 5 233 251 A (NEHMER CONRAD C) 3 août 1993<br>abrégé<br>* figure 1 *<br>--- | 1 | |
| A | FR 2 452 817 A (SALZI ANDRE) 24 octobre 1980<br>* figures 2,3 *<br>--- | 1 | |
| A | US 1 546 720 A (R. H. DAVIS) 21 juillet 1925<br>* figures 5-8 *<br>----- | 1 | |
| | | | **DOMAINES TECHNIQUES RECHERCHES (Int.Cl.6)**<br><br>H02K |

Le présent rapport a été établi pour toutes les revendications

| Lieu de la recherche | Date d'achèvement de la recherche | Examinateur |
|---|---|---|
| LA HAYE | 15 avril 1998 | Zoukas, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

11